# EUROPÄISCHE PATENTSCHRIFT

(11) **EP 1 167 721 B1**
(45) Veröffentlichungstag und Bekanntmachung des Hinweises auf die Patenterteilung: **28.06.2006**
(21) Anmeldenummer: 01112664.6
(22) Anmeldetag: 25.05.2001
(51) Int. Cl.: F02C 7/18, F01D 5/18, F01D 25/12

(54) **Verfahren zum Kühlen einer Gasturbinenanlage sowie Gasturbinenanlage zur Durchführung des Verfahrens**
Method and system for cooling a gas turbine plant
Procédé et dispositif de refroidissement d'une turbine a gaz

(30) Priorität: 05.06.2000 DE 10027842
(43) Veröffentlichungstag der Anmeldung: 02.01.2002
(73) Patentinhaber: Alstom Technology Ltd, 5400 Baden (CH)
(72) Erfinder: Reiter, Wilhelm, 79790 Küssaberg (DE); Wettstein, Hans, Dr., 5442 Fislisbach (CH)

(56) Entgegenhaltungen:
- EP-A- 0 392 664
- EP-A- 1 001 136
- EP-A- 1 149 983
- EP-A- 1 162 355
- WO-A-97/38219
- US-A- 5 782 076
- US-A- 5 839 271
- US-A- 6 065 282

## Beschreibung

### TECHNISCHES GEBIET

Die vorliegende Erfindung bezieht sich auf das Gebiet der Gasturbinen. Sie betrifft ein Verfahren zum Kühlen einer Gasturbine gemäss dem Oberbegriff des Anspruches 1 sowie eine Gasturbinenanlage gemäss dem Oberbegriff des Anspruchs 14 zur Durchführung des Verfahrens.

Ein solches Verfahren und eine solche Gasturbinenanlage sind z. B. aus der Druckschrift US-A-5,611,197 bekannt.

### STAND DER TECHNIK

Bestehende Gasturbinen (Gasturbinenanlagen) verwenden zur Kühlung der heissen Teile, besonders der Brennkammer und der vom Heissgas durchströmten Turbine entweder Kühlfluide, die dem Verdichter (Kompressor) bei passendem Druck entnommen, manchmal auch noch nachgekühlt werden, und nach erfolgter Kühlung der heissen Teile der Turbinenströmung beigegeben werden, oder geschlossene Kühlkreisläufe, die von einer fremden Kühlfluidquelle, meistens mit Wasserdampf, versorgt werden. Bei letzteren - die häufig in Kombikraftwerken zu finden sind - kann die Kühlwärme im nachgeschalteten Prozess oft noch genutzt werden. Eine weitere Möglichkeit, die beispielsweise in der EP-A2-0 899 425 der Anmelderin beschrieben ist, kombiniert speziell bei der Schaufelkühlung ein geschlossenes Dampfkühlsystem im Hauptteil der Schaufel mit einem offenen Kühlsystem im Bereich der Schaufeleintrittskante.

Die erste Kategorie hat den Nachteil, dass das Kühlfluid, welches die Erwärmung in der Brennkammer inhärent umgeht, in der Kühlstrecke meistens einen höheren Druckabfall erleidet, als er für die Kühlaufgabe nötig ist. Zusätzlich werden Mischverluste beim Eintritt des Kühlfluids in die Hauptströmung erzeugt. Beides sind erhebliche Prozessverluste, die den Wirkungsgrad des Gesamtprozesses massgeblich beeinträchtigen.

Die zweite Kategorie der von aussen versorgten geschlossenen Kühlsysteme und insbesondere auch die dritte Kategorie der kombinierten Kühlsysteme hat zwar diese Nachteile nicht oder nur bedingt, der Betrieb wird dafür aber von einer äusseren Kühlmittelversorgung abhängig, was eine erhöhte Komplexität, sowie erhöhte Kosten und Sicherheitsrisiken mit sich bringt.

In der eingangs genannten US-A-5,611,197 ist nun eine Gasturbine mit einem geschlossenen Kühlsystem für die Leit- und Laufschaufeln sowie das Heissgasgehäuse der Turbine vorgeschlagen worden, bei welchem dem Verdichter auf einer mittleren Druckstufe oder am Ausgang Luft bei einem bestimmten Druck entnommen, als Kühlluft durch die zu kühlenden Bauteile geführt und anschliessend auf einer geeigneten niedrigeren Druckstufe wieder in den Verdichter eingespiesen wird. Die zurückgeführte Kühlluft kann dabei vor der Einspeisung in den Verdichter zusätzlich auch noch in einem Kühler abgekühlt werden.

Diese bekannte Art des geschlossenen Kühlkreislaufes hat hinsichtlich Einfachheit von Aufbau und Betrieb und Beeinflussung des Gesamtwirkungsgrades gegenüber den weiter oben beschriebenen Kühlungsarten erhebliche Vorteile. Nachteilig ist jedoch, dass - gerade auch im Bezug auf die Turbinenschaufeln - eine Filmkühlung der dem Heissgas ausgesetzten Bauteiloberflächen mit diesem hermetisch geschlossenen Kühlkreislauf nicht ohne weiteres möglich ist. Es muss daher entweder auf eine Filmkühlung verzichtet werden - was die Belastbarkeit der Bauteile und damit letztendlich den Wirkungsgrad verringert, oder es muss für die Filmkühlung ein separater Kühlkreis vorgesehen werden, der die Komplexität der Anlage und damit deren Störanfälligkeit erhöht.

### DARSTELLUNG DER ERFINDUNG

Es ist daher Aufgabe der Erfindung, ein Kühlverfahren für eine Gasturbinenanlage sowie eine Gasturbinenanlage zur Durchführung des Verfahrens anzugeben, welche die Nachteile bekannter Verfahren bzw. Gasturbinenanlagen vermeidet und sich insbesondere durch eine hohe Kühleffektivität bei gleichzeitig einfachem Aufbau und Betrieb und hohem Gesamtwirkungsgrad der Anlage auszeichnet.

Die Aufgabe wird durch die Gesamtheit der Merkmale der Ansprüche 1 und 14 gelöst. Der Kern der Erfindung besteht darin, von einem den Verdichter mit einbeziehenden, geschlossenen Kühlluftkreislauf ausgehend an dem gekühlten Bauteil nach Art einer gezielten Leckage einen kleinen Teil der Kühlluft abzuzweigen und durch entsprechende Filmkühlbohrungen nach aussen abzugeben, um ohne wesentliche Beeinträchtigung des Wirkungsgrades eine wirksame Filmkühlung auf der heissgasbelasteten Aussenfläche des Bauteils zu ermöglichen.

Bevorzugt umfassen die mittels der Kühlluft gekühlten, thermisch belasteten Bauteile die Wände der Brennkammer und/oder Gehäuseteile der Turbine und/oder Rotorteile der Turbine und/oder Schaufeln der Turbine.

Eine bevorzugte Ausführungsform des erfindungsgemässen Verfahrens ist dadurch gekennzeichnet, dass die Schaufeln der Turbine mittels der Kühlluft gekühlt werden, und dass die Filmkühlbohrungen an den Schaufeleintrittskanten und/oder den Schaufelaustrittskanten angeordnet sind. Hierdurch werden mit einem geringen Verlust an Kühlluft die besonders stark belasteten Kanten der Schaufeln wirksam filmgekühlt.

Besonders einfach wird das Verfahren, wenn gemäss einer anderen Ausführungsform die Turbine eine Mehrzahl von Schaufelreihen umfasst, und die Schaufelreihen nacheinander von der Kühlluft durchströmt werden.

Die Kühlluft erleidet beim Kühlvorgang einen Druckverlust, der vor dem Rückführen der Kühlluft durch Komprimieren wieder ausgeglichen werden muss. Dies kann mit besonders wenig Aufwand geschehen, wenn gemäss einer anderen Ausführungsform des erfindungsgemässen Verfahrens zum Verdichten der Kühlluft nach dem Kühlvorgang der Verdichter der Gasturbinenanlage selbst verwendet wird, d.h., wenn die Kühlluft auf einer mittleren Druckstufe in den Verdichter eingespiesen wird.

Alternativ dazu kann aber auch zum Verdichten der Kühlluft nach dem Kühlvorgang ein externer Verdichter verwendet werden. Wird dann die Kühlluft mittels des externen Verdichters auf den Druck der Verdichterendluft verdichtet, kann die verdichtete Kühlluft direkt der Verdichterendluft zugefügt werden.

Bevorzugt wird die Kühlluft nach dem Kühlvorgang und vor dem Verdichten abgekühlt. Durch Mischen mit der übrigen Verdichterluft kann so insbesondere die Verdichterendtemperatur abgesenkt werden. Dies erlaubt eine Steigerung des Druckverhältnisses und damit des Wirkungsgrades.

Zum Abkühlen der Kühlluft kann dabei ein Kühler verwendet werden. Es ist aber auch denkbar, dass zum Abkühlen der Kühlluft Wasser direkt in die Kühlluft eingespritzt wird. Ebenso ist es möglich, die Kühlluft mittels eines Wärmetauschers mit der Verdichterendluft zu kühlen, wobei vorzugsweise die Kühlluft nach Durchlaufen des Wärmetauschers mittels eines anderen Kühlmediums noch weiter abgekühlt wird.

Eine bevorzugte Ausführungsform der Gasturbinenanlage nach der Erfindung dadurch gekennzeichnet, dass die zweiten Kühlleitungen in den Verdichter auf einer mittleren Druckstufe münden. Alternativ dazu kann in den zweiten Kühlleitungen ein externer Verdichter angeordnet sein, wobei die zweiten Kühlleitungen in den Ausgang des Verdichters der Gasturbinenanlage münden.

Eine andere bevorzugte Ausführungsform zeichnet sich dadurch aus, dass in den zweiten Kühlleitungen ein Kühler angeordnet ist.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein stark vereinfachtes Anlagenschema einer Gasturbinenanlage gemäss einem ersten Ausführungsbeispiel der Erfindung mit zwei alternativen Kühlkreisläufen mit Rückkühlung zur Kühlung von Schaufeln in der Turbine;
- Fig. 2: den Querschnitt durch eine beispielhafte Schaufel mit Filmkühlung an der Schaufeleintrittskante und Schaufelaustrittskante, wie sie für die Verwirklichung der Erfindung geeignet ist;
- Fig. 3: eine zu Fig. 1 vergleichbare Darstellung eines zweiten Ausführungsbeispiels der Erfindung mit sukzessiver Kühlung mehrerer Schaufelreihen und Rekompression der Kühlluft durch einen externen Verdichter;
- Fig. 4: eine zu Fig. 1 vergleichbare Darstellung eines dritten Ausführungsbeispiels der Erfindung mit einer Rückkühlung der Kühlluft mittels der Verdichterendluft in einem Wärmetauscher und einem nachgeschalteten weiteren Kühler;
- Fig. 5: eine zu Fig. 1 vergleichbare Darstellung eines vierten Ausführungsbeispiels der Erfindung, bei welchem die Rückkühlung der Kühlluft mittels Einspritzen von Wasser erfolgt; und
- Fig. 6: eine zu Fig. 1 vergleichbare Darstellung eines fünften Ausführungsbeispiels der Erfindung, bei dem die Wände der Brennkammer (Brennkammerliner) und/oder das Heissgasgehäuse der Turbine gekühlt werden.

### WEGE ZUR AUSFÜHRUNG DER ERFINDUNG

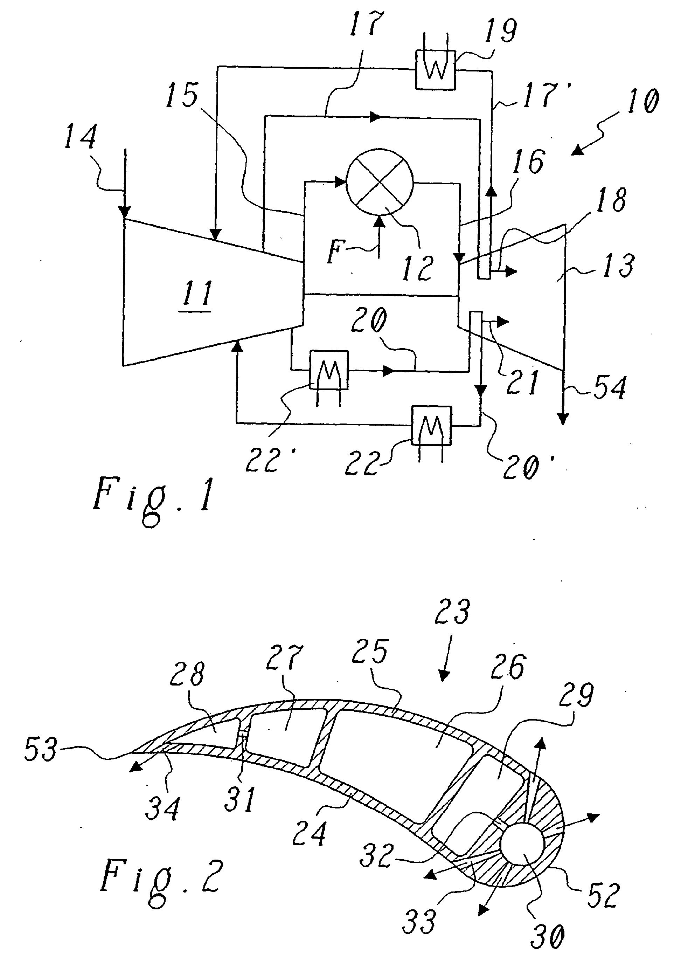

In Fig. 1 ist ein stark vereinfachtes Anlagenschema einer Gasturbinenanlage gemäss einem ersten Ausführungsbeispiel der Erfindung mit zwei alternativen Kühlkreisläufen wiedergegeben. Die Gasturbinenanlage 10 umfasst einen (üblicherweise mehrstufigen) Verdichter 11, eine Brennkammer 12 und eine (üblicherweise mehrstufige) Turbine 13. Verdichter 11 und Turbine 13 weisen entsprechende Schaufelreihen auf, die auf einem gemeinsamen Rotor angeordnet sind. Der Verdichter 11 saugt eingangsseitig Ansaugluft 14 an, verdichtet sie und gibt sie ausgangsseitig in Form von Verdichterendluft 15 an die Brennkammer 12 ab, wo sie als Verbrennungsluft zur der Verbrennung eines (flüssigen oder gasförmigen) Brennstoffes F verwendet wird. Das bei der Verbrennung entstehende Heissgas 16 wird in der nachfolgenden Turbine 13 unter Arbeitsleistung entspannt und schliesslich als Abgas 54 an einen Kamin oder - in einem Kombikraftwerk - an einen nachgeschalteten Abhitzedampferzeuger weitergeleitet.

In der Turbine 13 befinden sich - umgeben von einem Heissgasgehäuse - verschiedene Reihen von Leit- und Laufschaufeln, die dem aus der Brennkammer 12 kommenden Heissgas 16 ausgesetzt sind, wobei die thermische Belastung der Schaufeln und Gehäuseteile bzw. der Wände der Uebergangsstücke um so grösser ist, je näher sie am Eingang der Turbine 13 plaziert sind. Diese thermisch stark belasteten Bauteile müssen gekühlt werden, um bei den für einen guten Wirkungsgrad erforderlichen hohen Heissgastemperaturen eine ausreichende Standzeit zu erreichen.

Erfindungsgemäss werden die thermisch belasteten Bauteile nun mit Kühlluft gekühlt, die aus dem Verdichter 11 bei einem vorgegebenen Druckniveau entnommen, über eine erste Kühlleitung 17 bzw. 20 zum zu kühlenden Bauteil geführt, dort zur Kühlung eingesetzt und anschliessend zum überwiegenden Teil über eine zweite Kühlleitung 17' bzw. 20' zum Verdichter 11 zurückgeführt und dort auf einem niedrigeren Druckniveau wieder eingespiesen wird. Durch diese Art der Wiedereinspeisung kann der Verdichter 11 den beim Kühlvorgang entstandenen Druckverlust ausgleichen. Die Kühlluft nimmt damit zu einem überwiegenden Teil als Verbrennungsluft am Verbrennungsprozess Teil und führt daher nur zu geringen Verlusten im Wirkungsgrad. Die Kühlung der thermisch belasteten Bauteile ist überwiegend eine Innenkühlung, bei der die Kühlluft durch im Inneren der Bauteile vorgesehene Kühlkanäle strömt. Es ergibt sich so ein weitgehend geschlossener Kühlkreislauf.

Anders als beim nächstkommenden Stand der Technik (siehe die eingangs genannte US-A-5,611,197) ist der Kühlkreislauf jedoch nicht vollständig geschlossen, sondern sieht eine zusätzliche Aussenkühlung in Form einer Filmkühlung vor. Am zu kühlenden Bauteil sind dazu Ausströmöffnungen (Filmkühlbohrungen) angeordnet, durch die ein kleiner Teil der zirkulierenden Kühlluft als Leckageluft 18 bzw. 21 nach aussen strömt und auf der heissgasbelasteten Aussenfläche des Bauteils einen kühlenden Film bildet. Der Anteil an Leckageluft 18, 21 ist dabei so gewählt, dass einerseits der Gesamtwirkungsgrad der Anlage nur geringfügig verringert wird, sich andererseits aber eine wirksame Filmkühlung einstellt.

Im Beispiel der Fig. 1 sind zwei solcher Kühlkreisläufe (17, 17', 18 und 20, 20', 21) dargestellt, die - je nach Bedarf - auf anderen Druckniveaus des Verdichters 11 Kühlluft entnehmen und wieder einspeisen. Die Leckageluft 18 bzw. 21, die in die Turbinenströmung einfliesst und damit nicht mehr durch die Brennkammer 12 geführt werden kann, ist in Fig. 1 durch kleine, vom Kühlkreislauf abgehende Pfeile symbolisiert. Die beim Kühlvorgang von der Kühlluft aufgenommene Wärme kann nun vor Wiedereinspeisung in den Verdichter 11 dadurch aus der Kühlluft entfernt werden, dass in den zweiten Kühlleitungen 17' bzw. 20' jeweils ein Kühler 19 bzw. 22 angeordnet wird. Als Kühlmedium in den Kühlern 19, 22 kommt dabei z.B. Wasser oder Dampf in Betracht. Es ist aber ebensogut auch möglich, zusätzlich zu oder anstelle dieser Rückkühlung die verdichtete Luft nach der Entnahme aus dem Verdichter 11 - z.B. mittels eines Kühlers 22' - auf niedrigere Temperatur zu kühlen, bevor sie zur Kühlung thermisch belasteter Bauteile verwendet wird.

Die Rückkühlung der Kühlluft mittels der Kühler 19, 22 kann gleichzeitig dazu eingesetzt werden, die Temperatur der im Verdichter 11 verdichteten Luft nach Art eines Zwischenkühlers abzusenken. Wird die Kühlluft in den Kühlern 19, 22 wesentlich stärker rückgekühlt, als es der Wärmeaufnahme beim Kühlvorgang entspricht, kann die Verdichterendtemperatur, d.h., die Temperatur der Verdichterendluft 15 abgesenkt werden, was eine Steigerung des Druckverhältnisses und damit eine Erhöhung des Wirkungsgrades ermöglicht.

Handelt es sich bei dem zu kühlenden Bauteil um eine Schaufel bzw. eine Schaufelreihe der Turbine 13, wird die Leckageluft vorzugsweise dazu verwendet, die Schaufeleintrittskanten und/oder Schaufelaustrittskanten der Schaufel(n) durch Filmkühlung zu kühlen. Eine dazu geeignete beispielhafte Schaufel 23 ist im Querschnitt in Fig. 2 dargestellt. Die Schaufel 23 hat eine druckseitige Schaufelwand 24 und eine saugseitige Schaufelwand 25, die sich jeweils an der Schaufeleintrittskante 52 und an der Schaufelaustrittskante 53 vereinigen. Im Inneren der Schaufel 23 sind - durch Stützwände voneinander getrennt - verschiedene Kühlkanäle 26, .., 30 angeordnet, die in Achsenrichtung der Schaufel 23 (d.h. senkrecht zur Zeichenebene) verlaufen und von der Kühlluft in wechselnder Richtung durchströmt werden (siehe z.B. die EP-A2-0 899 425). Von den im Bereich der Kanten 52, 53 angeordneten Kühlkanälen 28 und 30 gehen Filmkühlbohrungen 33 bzw. 34 nach aussen, durch welche die Leckageluft ausströmen und auf der Aussenseite einen Kühlfilm bilden kann (siehe z.B. auch die US-A-5,498,133). Die Kühlkanäle 28, 30 werden dabei aus den angrenzenden Kühlkanälen 27, 29 durch Verbindungskanäle 31, 32 mit Kühlluft versorgt.

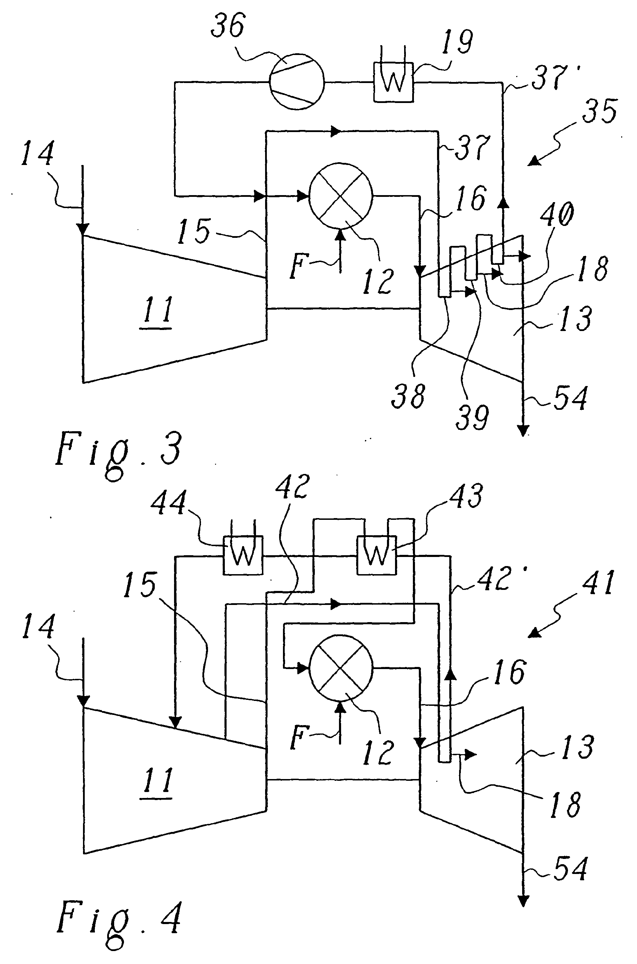

Ausgehend von dem in Fig. 1 dargestellten Grundschema der erfindungsgemässen Kühlung können im Rahmen der Erfindung verschiedene Varianten realisiert werden, die auf unterschiedliche Anwendungsfälle abgestimmt sind und ihre speziellen Vorteile aufweisen. Bei dem in Fig. 3 wiedergegebenen Ausführungsbeispiel einer Gasturbinenanlage 35 sind zwei dieser Varianten verwirklicht. Zum einen wird bei dem hier gezeigten Kühlkreislauf, der durch die Kühlleitungen 37 und 37' gebildet wird, die Kühlluft direkt aus der Verdichterendluft 15 abgezweigt und der Verdichterendluft 15 auch wieder zugefügt. Die notwendige Rekompression wird daher nicht im Verdichter 11 der Gasturbinenanlage 35 vorgenommen, sondern mittels eines externen Verdichters 36. Auch hier ist für die Rückkühlung vor der Rekompression ein Kühler 19 vorgesehen. Der Kühlkreislauf wird bei diesem Beispiel nicht nur für eine einzelne Schaufelreihe der Turbine 13 verwendet, sondern für mehrere Schaufelreihen 38, 39 und 40, die von der Kühlluft sequentiell durchströmt werden. In jeder der Schaufelreihen 38, .., 40 strömt zur Filmkühlung der Kanten entsprechend Leckageluft in die Hauptströmung der Turbine 13 aus.

Ein anderes Ausführungsbeispiel der erfindungsgemässen Kühlung ist in Fig. 4 dargestellt. Der Kühlkreislauf der Gasturbinenanlage 41, der hier die Kühlleitungen 42 und 42' umfasst und eine (oder mehrere) Schaufelreihe(n) der Turbine 13 kühlt, benutzt zur Rückkühlung der beim Kühlvorgang erwärmten Kühlluft direkt die Verdichterendluft 15. Hierzu wird in die zweite Kühlleitung 42' ein Wärmetauscher 43 eingefügt, der (im Gegenstrom) von der Kühlluft und der Verdichterendluft 15 durchströmt wird. Reicht diese erste Rückkühlung im Wärmetauscher 43 nicht aus, kann noch ein zusätzlicher Kühler 44 nachgeschaltet werden, der als Kühlmedium beispielsweise Wasser oder Dampf verwendet.

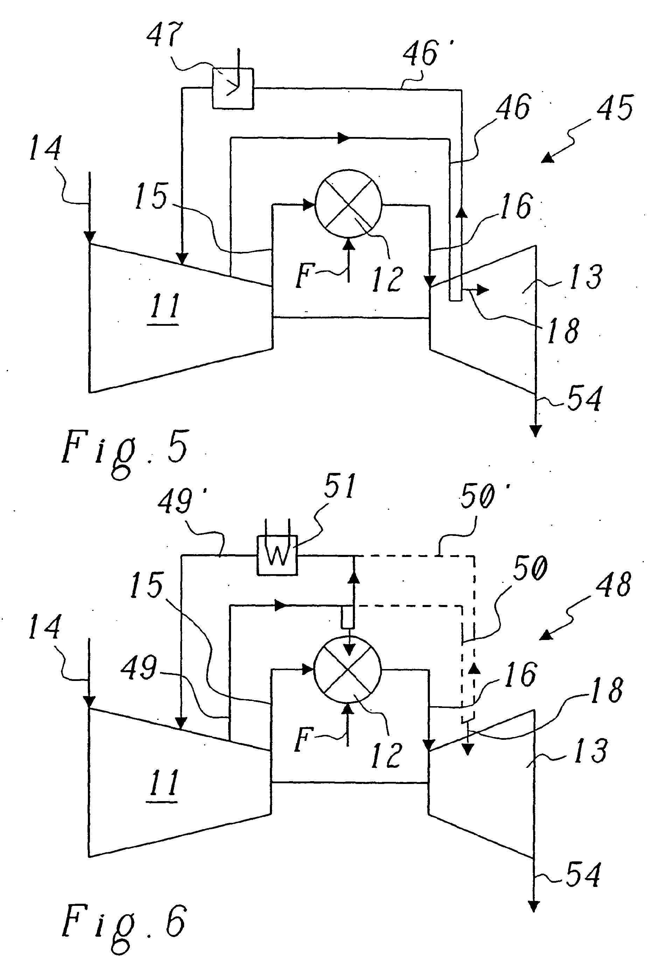

Eine andere Möglichkeit der Rückkühlung ist im Ausführungsbeispiel der Fig. 5 dargestellt. Bei der Gasturbinenanlage 45 dieser Figur ist in den Kühlkreislauf mit den Kühlleitungen 46, 46' eine Einspritzvorrichtung 47 eingefügt, in welcher nach Art einer "Quenchkühlung" Wasser in die Kühlluft eingespritzt bzw. eingedüst wird. Die dadurch erreichbare Temperaturabsenkung der Kühlluft wird vorzugsweise so ausgelegt, dass nach der Vermischung der rückgekühlten Kühlluft mit der durch den Verdichter 11 strömenden Hauptluft die Temperatur des Mischgases verringert wird. Wie bereits oben erwähnt, besteht dadurch die Möglichkeit, den Wirkungsgrad der Anlage zu erhöhen.

Schliesslich ist es gemäss Fig. 6 möglich, im Rahmen der Erfindung bei einer Gasturbinenanlage 48 anstelle der oder zusätzlich zu den Schaufeln der Turbine 13 auch andere thermisch stark belastete Bauteile der Anlage mit Luft im geschlossenen Kreislauf zu kühlen. So ist in Fig. 6 der Kühlkreislauf mit den Kühlleitungen 49, 49' und dem Kühler 51 dafür ausgelegt, die Wände der Brennkammer 12 bzw. die Brennkammerliner durch innere Kühlluftzirkulation und externe Filmkühlung zu kühlen. Ein anderer (gestrichelt eingezeichneter) Kühlkreislauf mit den Kühlleitungen 50, 50' sorgt für eine innere und äussere Kühlung des Heissgasgehäuses der Turbine 13, insbesondere im Eintrittsbereich der heissen Gase.

Insgesamt ergibt sich mit der Erfindung eine wirkungsvolle Kühlung der thermisch belasteten Bauteile einer Gasturbinenanlage, die einfach aufgebaut ist und betrieben werden kann, flexibel eingesetzt werden kann und nur geringe Auswirkungen auf den Gesamtwirkungsgrad der Anlage hat.

### BEZUGSZEICHENLISTE

- 10: Gasturbinenanlage
- 11: Verdichter (Kompressor)
- 12: Brennkammer
- 13: Turbine
- 14: Ansaugluft
- 15: Verdichterendluft
- 16: Heissgas
- 17, 17': Kühlleitung
- 18, 21: Leckageluft
- 19, 22, 22': Kühler
- 20, 20': Kühlleitung
- 23: Schaufel
- 24: Schaufelwand (druckseitig)
- 25: Schaufelwand (saugseitig)
- 26, .., 30: Kühlkanal
- 31, 32: Verbindungskanal
- 33, 34: Filmkühlbohrung
- 35, 41, 45, 48: Gasturbinenanlage
- 36: Verdichter (extern)
- 37, 37': Kühlleitung
- 38, 39, 40: Schaufelreihe
- 42, 42';46, 46': Kühlleitung
- 43: Wärmetauscher
- 44, 51: Kühler
- 47: Einspritzvorrichtung
- 49, 49';50, 50': Kühlleitung
- 52: Schaufeleintrittskante
- 53: Schaufelaustrittskante
- 54: Abgas
- F: Brennstoff

## Patentansprüche

1. Verfahren zum Kühlen einer Gasturbinenanlage (10, 35, 41, 45, 48), umfassend einen Verdichter (11), welcher eingangsseitig Ansaugluft (14) ansaugt und zu ausgangsseitig zur Verfügung stehender Verdichterendluft (15) verdichtet, eine Brennkammer (12), in welcher unter Verwendung der Verdichterendluft (15) ein Brennstoff (F) unter Bildung von Heissgas (16) verbrannt wird, sowie eine Turbine (13), in welcher das Heissgas (16) unter Arbeitsleistung entspannt wird, bei welchem Verfahren verdichtete Luft aus dem Verdichter (11) entnommen, als Kühlluft zur Kühlung in einem innenliegenden Kühlkanal (26, .., 30) durch thermisch belastete Bauteile (23; 38, .., 40) der Brennkammer (12) und/oder der Turbine (13) geleitet, anschliessend verdichtet und der Verdichterendluft (15) zugefügt wird, **dadurch gekennzeichnet, dass** ein geringer Teil der Kühlluft zur Filmkühlung durch an den Bauteilen (23; 38, .., 40) angeordnete Filmkühlbohrungen (33, 34) nach Art einer gezielten Leckage in die Turbinenströmung eingespiesen wird.

2. Verfahren nach Anspruch 1, **dadurch gekennzeichnet, dass** die mittels der Kühlluft gekühlten, thermisch belasteten Bauteile die Wände der Brennkammer (12) und/oder Wände der Uebergangsstücke und/oder Gehäuseteile der Turbine (13) und/oder Rotorteile der Turbine (13) und/oder Schaufeln (23) der Turbine (13) umfassen.

3. Verfahren nach Anspruch 2, **dadurch gekennzeichnet, dass** die Schaufeln (23) der Turbine mittels der Kühlluft gekühlt werden, und dass die Filmkühlbohrungen (33, 34) an den Schaufeleintrittskanten (52) und/oder den Schaufelaustrittskanten (53) angeordnet sind.

4. Verfahren nach einem der Ansprüche 2 und 3, **dadurch gekennzeichnet, dass** die Turbine (13) eine Mehrzahl von Schaufelreihen (38, 39, 40) umfasst, und dass die Schaufelreihen (38, 39, 40) nacheinander von der Kühlluft durchströmt werden.

5. Verfahren nach einem der Ansprüche 1 bis 4, **dadurch gekennzeichnet, dass** zum Verdichten der Kühlluft nach dem Kühlvorgang der Verdichter (11) der Gasturbinenanlage (10, 35, 41, 45, 48) selbst verwendet wird.

6. Verfahren nach einem der Ansprüche 1 bis 4, **dadurch gekennzeichnet, dass** zum Verdichten der Kühlluft nach dem Kühlvorgang ein externer Verdichter (36) verwendet wird.

7. Verfahren nach Anspruch 6, **dadurch gekennzeichnet, dass** die Kühlluft mittels des externen Verdichters (36) auf den Druck der Verdichterendluft (15) verdichtet wird, und dass die verdichtete Kühlluft direkt der Verdichterendluft (15) zugefügt wird.

8. Verfahren nach einem der Ansprüche 1 bis 7, **dadurch gekennzeichnet, dass** die Kühlluft nach dem Kühlvorgang und vor dem Verdichten abgekühlt wird.

9. Verfahren nach einem der Ansprüche 1 bis 8, **dadurch gekennzeichnet, dass** die Kühlluft nach der Entnahme aus dem Verdichter (11) auf niedrigere Temperatur gekühlt wird, bevor sie zur Kühlung thermisch belasteter Bauteile verwendet wird.

10. Verfahren nach einem der Ansprüche 8 und 9, **dadurch gekennzeichnet, dass** zum Abkühlen der Kühlluft ein Kühler (19, 22, 22', 44, 51) verwendet wird.

11. Verfahren nach Anspruch 8, **dadurch gekennzeichnet, dass** zum Abkühlen der Kühlluft Wasser direkt in die Kühlluft eingespritzt wird.

12. Verfahren nach Anspruch 8, **dadurch gekennzeichnet, dass** die Kühlluft mittels eines Wärmetauschers (43) mit der Verdichterendluft (15) gekühlt wird.

13. Verfahren nach Anspruch 12, **dadurch gekennzeichnet, dass** die Kühlluft nach Durchlaufen des Wärmetauschers (43) mittels eines anderen Kühlmediums noch weiter abgekühlt wird.

14. Gasturbinenanlage (10, 35, 41, 45, 48) zur Durchführung des Verfahrens nach einem der Ansprüche 1 bis 12, umfassend einen Verdichter (11), welcher eingangsseitig Ansaugluft (14) ansaugt und zu ausgangsseitig zur Verfügung stehender Verdichterendluft (15) verdichtet, eine Brennkammer (12), in welcher unter Verwendung der Verdichterendluft (15) ein Brennstoff (F) unter Bildung von Heissgas (16) verbrannt wird, sowie eine Turbine (13), in welcher das Heissgas (16) unter Arbeitsleistung entspannt wird, wobei zur Kühlung von thermisch belasteten Bauteilen (23; 38, .., 40) der Brennkammer (12) und/oder der Turbine (13) erste Kühlleitungen (20, 37, 42, 46, 49, 50) von dem Verdichter (11) und/oder dem Ausgang des Verdichters (11) zu den Bauteilen (23; 38, .., 40) und zweite Kühlleitungen (20', 37', 42', 46', 49', 50') von den Bauteilen (23; 38, .., 40) zum Verdichter (11) und/oder dem Ausgang des Verdichters (11) zurück vorgesehen sind, wobei im zweiten Fall in den zweiten Kühlleitungen (20', 37', 42', 46', 49', 50') ein externer Verdichter (36) angeordnet ist, **dadurch gekennzeichnet, dass** die zu kühlenden Bauteile (23; 38, .., 40) Filmkühlbohrungen (33, 34) aufweisen, welche mit den ersten und zweiten Kühlleitungen (20, 37, 42, 46, 49, 50 bzw. 20', 37', 42', 46', 49', 50') in Fluidverbindung stehen.

15. Gasturbinenanlage nach Anspruch 13, **dadurch gekennzeichnet, dass** die gekühlten Bauteile Schaufeln (23) der Turbine (13) umfassen, und dass die Filmkühlbohrungen (33, 34) an den Schaufeleintrittskanten (52) und/oder den Schaufelaustrittskanten (53) angeordnet sind.

16. Gasturbinenanlage nach einem der Ansprüche 14 und 15, **dadurch gekennzeichnet, dass** die zweiten Kühlleitungen (20', 37', 42', 46', 49', 50') in den Verdichter (11) auf einer mittleren Druckstufe münden.

17. Gasturbinenanlage nach einem der Ansprüche 14 und 15, **dadurch gekennzeichnet, dass** in den zweiten Kühlleitungen (20', 37', 42', 46', 49', 50') ein externer Verdichter (36) angeordnet ist, und dass die zweiten Kühlleitungen (20', 37', 42', 46', 49', 50') in den Ausgang des Verdichters (11) der Gasturbinenanlage (35) münden.

18. Gasturbinenanlage nach einem der Ansprüche 14 bis 17, **dadurch gekennzeichnet, dass** in den zweiten Kühlleitungen (20', 37', 42', 46', 49', 50') ein Kühler (19, 22, 44, 51) angeordnet ist.

19. Gasturbinenanlage nach einem der Ansprüche 14 bis 17, **dadurch gekennzeichnet, dass** in den zweiten Kühlleitungen (20', 37', 42', 46', 49', 50') eine Einspritzvorrichtung (47) zum Einspritzen von Wasser in die Kühlluft angeordnet ist.

20. Gasturbinenanlage nach einem der Ansprüche 14 bis 17, **dadurch gekennzeichnet, dass** in den zweiten Kühlleitungen (20', 37', 42', 46', 49', 50') ein von der Verdichterendluft (15) durchflossener Wärmetauscher (43) angeordnet ist.

21. Gasturbinenanlage nach Anspruch 20, **dadurch gekennzeichnet, dass** dem Wärmetauscher (43) ein mit einem anderen Kühlmedium betriebener Kühler (44) nachgeschaltet ist.

22. Gasturbinenanlage nach einem der Ansprüche 14 bis 21, **dadurch gekennzeichnet, dass** in den ersten Kühlleitungen (20, 37, 42, 46, 49, 50) Mittel zum Abkühlen der Kühlluft, insbesondere in Form eines Kühlers (22'), angeordnet sind.

## Claims

1. Method for cooling a gas turbine plant (10, 35, 41, 45, 48) comprising a compressor (11), which sucks in intake air (14) on the inlet side and compresses it into compressor discharge air (15) available on the outlet side, a combustion chamber (12), in which, using the compressor discharge air (15), a fuel (F) is burnt so as to form hot gas (16), and a turbine (13), in which the hot gas (16) is expanded, so as to perform work, in which method compressed air is extracted from the compressor (11), is conducted as cooling air for cooling in an internal cooling duct (26, ..., 30) through thermally loaded components (23; 38, ..., 40) of the combustion chamber (12) and/or of the turbine (13), is subsequently compressed and is added to the compressor discharge air (15), **characterized in that** a small part of the cooling air is fed for film cooling into the turbine flow, in the manner of a controlled leakage, through film-cooling bores (33, 34) arranged at the components (23; 38, ..., 40).

2. Method according to Claim 1, **characterized in that** the thermally loaded components cooled by means of the cooling air comprise the walls of the combustion chamber (12) and/or walls of the transition pieces and/or casing parts of the turbine (13) and/or rotor parts of the turbine (13) and/or blades (23) of the turbine (13).

3. Method according to Claim 2, **characterized in that** the blades (23) of the turbine are cooled by means of the cooling air, and **in that** the film-cooling bores (33, 34) are arranged at the blade entry edges (52) and/or the blade exit edges (53).

4. Method according to one of Claims 2 and 3, **characterized in that** the turbine (13) comprises a plurality of blade rows (38, 39, 40), and **in that** the cooling air flows through the blade rows (38, 39, 40) in succession.

5. Method according to one of Claims 1 to 4, **characterized in that** the compressor (11) of the gas turbine plant (10, 35, 41, 45, 48) itself is used for compressing the cooling air after the cooling operation.

6. Method according to one of Claims 1 to 4, **characterized in that** an external compressor (36) is used for compressing the cooling air after the cooling operation.

7. Method according to Claim 6, **characterized in that** the cooling air is compressed to the pressure of the compressor discharge air (15) by means of the external compressor (36), and **in that** the compressed cooling air is added directly to the compressor discharge air (15).

8. Method according to one of Claims 1 to 7, **characterized in that** the cooling air is cooled after the cooling operation and before compression.

9. Method according to one of Claims 1 to 8, **characterized in that** the cooling air, after being extracted from the compressor (11), is cooled to a lower temperature before it is used for the cooling of components subjected to thermal load.

10. Method according to one of Claims 8 and 9, **characterized in that** a cooler (19, 22, 22', 44, 51) is used for cooling the cooling air.

11. Method according to Claim 8, **characterized in that** water is injected directly into the cooling air for cooling the latter.

12. Method according to Claim 8, **characterized in that** the cooling air is cooled with the compressor discharge air (15) by means of a heat exchanger (43).

13. Method according to Claim 12, **characterized in that** the cooling air is further cooled, after passing through the heat exchanger (43), by means of another cooling medium.

14. Gas turbine plant (10, 35, 41, 45, 48) for carrying out the method according to one of Claims 1 to 12, comprising a compressor (11), which sucks in intake air (14) on the inlet side and compresses it into compressor discharge air (15) available on the outlet side, a combustion chamber (12), in which, using the compressor discharge air (15), a fuel (F) is burnt so as to form hot gas (16), and a turbine (13), in which the hot gas (16) is expanded so as to perform work, there being provided for the cooling of thermally loaded components (23; 38, ..., 40) of the combustion chamber (12) and/or of the turbine (13) first cooling lines (20, 37, 42, 46, 49, 50) from the compressor (11) and/or the outlet of the compressor (11) to the components (23; 38, ..., 40) and second cooling lines (20', 37', 42', 46', 49', 50') from the components (23; 38, ..., 40) back to the compressor (11) and/or the outlet of the compressor (11), in the second case an external compressor (36) being arranged in the second cooling lines (20', 37', 42', 46', 49', 50'), **characterized in that** the components (23; 38, ..., 40) to be cooled have film-cooling bores (33, 34) which are fluid-connected to the first and second cooling lines (20, 37, 42, 46, 49, 50 and 20', 37', 42', 46', 49', 50').

15. Gas turbine plant according to Claim 14, **characterized in that** the cooled components comprise blades (23) of the turbine (13), and **in that** the film-cooling bores (33, 34) are arranged at the blade entry edges (52) and/or the blade exit edges (53).

16. Gas turbine plant according to one of claims 14 and 15, **characterized in that** the second cooling lines (20', 37', 42', 46', 49', 50') issue into the compressor (11) at a medium pressure stage.

17. Gas turbine plant according to one of Claims 14 and 15, **characterized in that** an external compressor (36) is arranged in the second cooling lines (20', 37', 42', 46', 49', 50'), and **in that** the second cooling lines (20', 37', 42', 46', 49', 50') issue into the outlet of the compressor (11) of the gas turbine plant (35).

18. Gas turbine plant according to one of Claims 14 to 17, **characterized in that** a cooler (19, 22, 44, 51) is arranged in the second cooling lines (20', 37', 42', 46', 49', 50').

19. Gas turbine plant according to one of Claims 14 to 17, **characterized in that** an injection device (47) for the injection of water into the cooling air is arranged in the second cooling lines (20', 37', 42', 46', 49', 50').

20. Gas turbine plant according to one of Claims 14 to 17, **characterized in that** a heat exchanger (43) through which the compressor discharge air (15) flows is arranged in the second cooling lines (20', 37', 42', 46', 49', 50').

21. Gas turbine plant according to Claim 20, **characterized in that** the heat exchanger (43) is followed by a cooler (44) operated with another cooling medium.

22. Gas turbine plant according to one of Claims 14 to 21, **characterized in that** means for cooling the cooling air, in particular in the form of a cooler (22'), are arranged in the first cooling lines (20, 37, 42, 46, 49, 50).

## Revendications

1. Procédé de refroidissement d'une installation de turbine à gaz (10, 35, 41, 45, 48), comprenant un compresseur (11) qui aspire de l'air d'admission (14) du côté de l'entrée et le comprime pour donner de l'air de sortie de compresseur (15) disponible du côté de la sortie, une chambre de combustion (12), dans laquelle un combustible (F) est brûlé en formant du gaz chaud (16) en utilisant l'air de sortie de compresseur (15), ainsi qu'une turbine (13) dans laquelle le gaz chaud (16) est détendu en fournissant du travail, procédé dans lequel de l'air comprimé est prélevé du compresseur (11), est guidé à travers des composants (23 ; 38, .., 40) sollicités thermiquement de la chambre de combustion (12) et/ou de la turbine (13) sous forme d'air de refroidissement pour le refroidissement dans un canal de refroidissement intérieur (26, .., 30), puis est comprimé et est ajouté à l'air de sortie de compresseur (15), **caractérisé en ce qu'**une faible partie de l'air de refroidissement est injectée pour le refroidissement par film à travers des alésages de refroidissement par film (33, 34) disposés sur les composants (23 ; 38, .., 40) à la manière d'une fuite ciblée dans l'écoulement de la turbine.

2. Procédé selon la revendication 1, **caractérisé en ce que** les composants sollicités thermiquement, refroidis au moyen de l'air de refroidissement, comprennent les parois de la chambre de combustion (12) et/ou des parois des pièces de transition et/ou des parties du boîtier de la turbine (13) et/ou des parties du rotor de la turbine (13) et/ou des aubes (23) de la turbine (13).

3. Procédé selon la revendication 2, **caractérisé en ce que** les aubes (23) de la turbine sont refroidies au moyen de l'air de refroidissement, et **en ce que** les alésages de refroidissement par film (33, 34) sont disposés sur les arêtes d'attaque des aubes (52) et/ou sur les arêtes de fuite des aubes (53).

4. Procédé selon l'une quelconque des revendications 2 ou 3, **caractérisé en ce que** la turbine (13) comprend une pluralité de rangées d'aubes (38, 39, 40) et **en ce que** les rangées d'aubes (38, 39, 40) sont parcourues les unes après les autres par l'air de refroidissement.

5. Procédé selon l'une quelconque des revendications 1 à 4, **caractérisé en ce que** pour la compression de l'air de refroidissement après l'opération de refroidissement, on utilise le compresseur propre (11) de l'installation de turbine à gaz (10, 35, 41, 45, 48).

6. Procédé selon l'une quelconque des revendications 1 à 4, **caractérisé en ce que** pour la compression de l'air de refroidissement après l'opération de refroidissement, on utilise un compresseur externe (36).

7. Procédé selon la revendication 6, **caractérisé en ce que** l'air de refroidissement est comprimé à la pression de l'air de sortie de compresseur (15) au moyen du compresseur externe (36) et **en ce que** l'air de refroidissement comprimé est directement acheminé à l'air de sortie de compresseur (15).

8. Procédé selon l'une quelconque des revendications 1 à 7, **caractérisé en ce que** l'air de refroidissement est refroidi après l'opération de refroidissement et avant la compression.

9. Procédé selon l'une quelconque des revendications 1 à 8, **caractérisé en ce que** l'air de refroidissement est refroidi à une plus basse température après son prélèvement du compresseur (11), avant d'être utilisé pour le refroidissement de composants sollicités thermiquement.

10. Procédé selon l'une quelconque des revendications 8 ou 9, **caractérisé en ce que** l'on utilise un refroidisseur (19, 22, 22', 44, 51) pour le refroidissement de l'air de refroidissement.

11. Procédé selon la revendication 8, **caractérisé en ce que** pour le refroidissement de l'air de refroidissement, de l'eau est injectée directement dans l'air de refroidissement.

12. Procédé selon la revendication 8, **caractérisé en ce que** l'air de refroidissement est refroidi avec l'air de sortie de compresseur (15) au moyen d'un échangeur de chaleur (43).

13. Procédé selon la revendication 12, **caractérisé en ce que** l'air de refroidissement est encore davantage refroidi après passage à travers l'échangeur de chaleur (43) au moyen d'un autre réfrigérant.

14. Installation de turbine à gaz (10, 35, 41, 45, 48) pour la mise en oeuvre du procédé selon l'une quelconque des revendications 1 à 12, comprenant un compresseur (11) qui aspire de l'air d'admission (14) du côté de l'entrée et le comprime pour donner de l'air de sortie de compresseur (15) disponible du côté de la sortie, une chambre de combustion (12), dans laquelle un combustible (F) est brûlé en formant du gaz chaud (16) en utilisant l'air de sortie de compresseur (15), ainsi qu'une turbine (13) dans laquelle le gaz chaud (16) est détendu en fournissant du travail, des premières conduites de refroidissement (20, 37, 42, 46, 49, 50) étant prévues du compresseur (11) et/ou de la sortie du compresseur (11) de retour aux composants (23 ; 38, .., 40) et des deuxièmes conduites de refroidissement (20', 37', 42', 46', 49', 50') étant prévues des composants (23 ; 38, .., 40) de retour au compresseur (11) et/ou à la sortie du compresseur (11) pour le refroidissement des composants sollicités thermiquement (23 ; 38, .., 40) de la chambre de combustion (12) et/ou de la turbine (13), un compresseur externe (36) étant disposé dans le deuxième cas dans les deuxièmes conduites de refroidissement (20', 37', 42', 46', 49', 50'), **caractérisée en ce que** les composants à refroidir (23 ; 38, .., 40) présentent des alésages de refroidissement par film (33, 34) qui sont en liaison fluidique avec les premières et les deuxièmes conduites de refroidissement (20, 37, 42, 46, 49, 50, respectivement 20', 37', 42', 46', 49', 50').

15. Installation de turbine à gaz selon la revendication 13, **caractérisée en ce que** les composants refroidis comprennent des aubes (23) de la turbine (13), et **en ce que** les alésages de refroidissement par film (33, 34) sont disposés sur les arêtes d'attaque des aubes (52) et/ou sur les arêtes de fuite des aubes (53).

16. Installation de turbine à gaz selon l'une quelconque des revendications 14 et 15, **caractérisée en ce que** les deuxièmes conduites de refroidissement (20', 37', 42', 46', 49', 50') débouchent dans le compresseur (11) au niveau d'un étage de pression moyen.

17. Installation de turbine à gaz selon l'une quelconque des revendications 14 et 15, **caractérisée en ce qu'**un compresseur externe (36) est disposé dans les deuxièmes conduites de refroidissement (20', 37', 42', 46', 49', 50') et **en ce que** les deuxièmes conduites de refroidissement (20', 37', 42', 46', 49', 50') débouchent dans la sortie du compresseur (11) de l'installation de turbine à gaz (35).

18. Installation de turbine à gaz selon l'une quelconque des revendications 14 à 17, **caractérisée en ce qu'**un refroidisseur (19, 22, 44, 51) est disposé dans les deuxièmes conduites de refroidissement (20', 37', 42', 46', 49', 50').

19. Installation de turbine à gaz selon l'une quelconque des revendications 14 à 17, **caractérisée en ce qu'**un dispositif d'injection (47) pour l'injection d'eau dans l'air de refroidissement est disposé dans les deuxièmes conduites de refroidissement (20', 37', 42', 46', 49', 50').

20. Installation de turbine à gaz selon l'une quelconque des revendications 14 à 17, **caractérisée en ce qu'**un échangeur de chaleur (43) parcouru par l'air de sortie de compresseur (15) est disposé dans les deuxièmes conduites de refroidissement (20', 37', 42', 46', 49', 50').

21. Installation de turbine à gaz selon la revendication 20, **caractérisée en ce qu'**un refroidisseur (44) fonctionnant avec un autre réfrigérant est monté après l'échangeur de chaleur (43).

22. Installation de turbine à gaz selon l'une quelconque des revendications 14 à 21, **caractérisée en ce que** des moyens pour refroidir l'air de refroidissement, notamment sous la forme d'un refroidisseur (22'), sont disposés dans les premières conduites de refroidissement (20, 37, 42, 46, 49, 50).
